# EUROPÄISCHE PATENTSCHRIFT

(11) **EP 2 357 567 B1**
(45) Veröffentlichungstag und Bekanntmachung des Hinweises auf die Patenterteilung: **04.06.2014**
(21) Anmeldenummer: 10015636.3
(22) Anmeldetag: 14.12.2010
(51) Int. Cl.: G06F 13/38, G06F 13/42, G06F 21/00

(54) **Verfahren zum Programmieren eines elektronischen Geräts**
Method for programming an electronic device
Procédé de programmation d'un appareil électronique

(30) Priorität: 16.12.2009 DE 102009058433
(43) Veröffentlichungstag der Anmeldung: 17.08.2011
(73) Patentinhaber: Giesecke & Devrient GmbH, 81677 München (DE)
(72) Erfinder: Baldischweiler, Michael, 81825 München (DE)

(56) Entgegenhaltungen:
- EP-A1- 2 056 231
- GB-A- 2 267 767
- US-B1- 6 918 057

## Beschreibung

Die Erfindung betrifft ein Verfahren zum Programmieren eines elektronischen Geräts. das eine gemäß dem Standard IEEE 1149.1 ausgebildete JTAG-Schnittstelle umfasst. Die Erfindung betrifft weiterhin einen tragbaren Datenträger, insbesondere eine Chipkarte, mit einer Schnittstelle zum Datenaustausch mit einem elektronischen Gerät sowie elektronisches Gerät mit einer gemäß dem Standard IEEE 1149.1 ausgebildeten JTAG-Schnittstelle.

JTAG (Joint Test Action Group) bezeichnet den IEEE-Standard 1149.1, der ein Verfahren zum Einspielen von Daten in einem Speicher, zum Testen und zum Debuggen von elektronischer Hardware direkt in der elektronischen Schaltung der Hardware beschreibt. Zweck des Verfahrens ist es, integrierte Schaltungen auf ihre Funktion zu testen, während sie sich bereits in ihrer Arbeitsumgebung befinden, beispielsweise verlötet auf einem Schaltungsträger. Dazu besitzt eine JTAG-fähige integrierte Schaltung Komponenten, die im Normalbetrieb von den Funktionen des Bauteils vollkommen abgetrennt sind und die Funktion des Bauteils nicht stören. Erst durch Aktivierung der JTAG-Funktion wird die Kontrolle bestimmter Ein- und Ausgänge an den JTAG Baustein übergeben.

Eine JTAG-Komponente besteht im Wesentlichen aus einer JTAG-Schnittstelle, welche auch als Test Access Port (TAP) bezeichnet wird, einem TAP-Controller, der eine Testlogik steuert, sowie Schieberegistern. Die JTAG-Schnittstelle besteht aus fünf Steuerleitungen zur Übertragung von nachfolgenden Signalen:1. Test Data Input (TDI), einem seriellen Eingang der Schieberegister. 2. Test Data Output (TDO), einem seriellen Ausgang der Schieberegister. 3. Test Clock (Tck), einem Taktsignal für die Testlogik. 4. Test Mode Select Input (TMS), einer Leitung, die bestimmt, in welchen Zustand der TAP-Controller übergehen soll. 5. Test Reset (TRST), einem optionalen Reset-Signal für die Testlogik.

In der US 6 918 057 B1 ist ein Verfahren zum Testen eines elektronischen Geräts über JTAG Schnittstellen näher beschrieben. Zum Testen wird mittels des Host-PC ein Bitstrom an das Gerät gesendet und die Reaktion darauf im Host-PC ausgewertet. Der Host-PC weist dazu das Testprogramm, das Auswertprogramm sowie eine Spannungs- und Steuerversorgung auf. Das System aus Gerät und Host-PC ist lediglich für Tests während der Herstellung zum Prüfen der Funktionalität des Geräts geeignet, allerdings für einen flexiblen Einsatz, beispielsweise zur Aktualisierung von Software oder Fehlerbehebung eines Geräts im Feld aufgrund der Baugröße und Komplexität nicht geeignet.

Die Aktualisierung von Software bzw. eines FPGA-Codes (FPGA = Field Programmable Gate Array) eines zur Maschinensteuerung vorgesehenen elektronischen Geräts erfolgt üblicherweise unter Zuhilfenahme eines sog. JTAG-Debuggers mit einem dazu eingerichteten Rechner, wie z.B. einem PC. Die zur Aktualisierung verwendete Software ist dabei auf dem PC gespeichert. Ein Schutz gegen das Ausspionieren der Software ist dabei ist dabei besonders wichtig, da gerade im Bereich von Maschinensteuerung das Know-how nicht in der Hardware der Maschine, sondern in der Ansteuerung der Maschine selbst (d.h. der darauf laufenden Software) liegt.

Um das Ausspionieren der Software zum Manipulieren des Geräts zu verhindern, sind aus dem Stand der Technik verschiedene Verfahren bekannt. Beispielsweise wird zwischen dem JTAG-Baustein und der zu programmierenden Hardware im elektronischen Gerät ein Zwischenbaustein eingesetzt. Dieser Zwischenbaustein empfängt die JTAG-Signale des JTAG-Debuggers und setzt diese Signale in verschlüsselte Signale um. Der Zwischenbaustein ist beispielsweise ein Application Specific Integrated Circuit, kurz ASIC, ein FPGA oder ein Mikroprozessor. Die Datenübertragung zwischen dem Zwischenbaustein und der zu programmierenden Hardware erfolgt in verschlüsselter Art und Weise. Erst bei erfolgreicher Authentifizierung des Zwischenbausteins ist das Einspielen von Daten, das Testen und Debuggen der Hardware möglich.

Ein alternatives Verfahren zum Verhindern der Manipulation des elektronischen Geräts über die JTAG Schnittstelle basiert auf der Tatsache, dass der JTAG-Baustein selbst nur in flüchtige Speicher, beispielsweise einem RAM, und nicht direkt in einen nichtflüchtigen Speicher schreiben kann. Zunächst erfolgt auch hier eine Authentifizierung des JTAG-Bausteins mit der Hardware des elektronischen Geräts. Ohne erfolgreiche Authentifizierung wird ist das Einspielen von Daten, das Testen oder Debuggen des elektronischen Geräts unmöglich. Nach erfolgreicher Authentifizierung, beispielsweise einer digitalen Signatur, wird der JTAG-Baustein eine Programmcodesequenz in einen flüchtigen Speicher. Aus diesem flüchtigen Speicher heraus wird eine Hardwarekomponente des elektronischen Geräts angesprochen, durch die wiederum das Schreiben in einen nichtflüchtigen Speicher veranlasst wird.

Aus der US 2004/0222305 A1 ist ein tragbarer Datenträger bekannt, der einen JTAG-Controller zum Debuggen des tragbaren Datenträgers selbst beinhaltet. Der JTAG-Test-Controller kann Testprozeduren initiieren, nachdem eine Testanforderung von einem mit dem tragbaren Datenträger verbundenen Rechner erhalten hat.

Es ist Aufgabe der vorliegenden Erfindung, ein Verfahren anzugeben, mit dem die Programmierung eines elektronischen Geräts abgesichert werden kann. Eine weitere Aufgabe der Erfindung besteht darin, einen tragbaren Datenträger anzugeben, der zum Programmieren eines Geräts eingesetzt werden kann. Schließlich soll ein zu programmierendes Gerät angegeben werden, welcher eine manipulationssichere Programmierung unterstützt.

Diese Aufgaben werden gelöst durch ein Verfahren gemäß den Merkmalen des Patentanspruchs 1, einen tragbaren Datenträger gemäß den Merkmalen des Patentanspruchs 10 sowie ein elektronisches Gerät gemäß den Merkmalen des Patentanspruchs 13. Vorteilhafte Ausgestaltungen ergeben sich jeweils aus den abhängigen Patentansprüchen.

Die Erfindung schafft ein Verfahren zum Programmieren eines Geräts, das eine erste, gemäß dem Standard IEEE 1149.1 ausgebildete, JTAG-Schnittstelle umfasst. Bei dem erfindungsgemäßen Verfahren wird ein tragbarer Datenträger, insbesondere eine Chipkarte, bereitgestellt, der zum Datenaustausch mit dem Gerät eine zweite, gemäß dem Standard IEEE 1149.1 ausgebildete, JTAG-Schnittstelle umfasst. Der tragbare Datenträger führt zur Programmierung des Geräts mit dem Gerät eine Kommunikation im JTAG-Modus aus, in der der Datenträger als JTAG-Master fungiert.

JTAG ist eine genormte Schnittstelle, die einfach und ohne feste Taktung arbeitet. Somit kann die Datenein- / -ausgabe via Software an den entsprechenden JTAG-Schnittstellen des Geräts und des tragbaren Datenträgers simuliert werden. Die auf dem tragbaren Datenträger gespeicherten Daten zur Programmierung des Geräts können nicht manipuliert werden, da diese aus dem Datenträger nicht auslesbar bzw. änderbar sind.

Bei dem tragbaren Datenträger kann es sich z.B. um eine Chipkarte im ID1-Format oder um eine MMC, µSD-, SD-Karte bzw. ein USB-Speicherstick handeln. Das zu programmierende elektronische Gerät ist in seiner Funktion nicht beschränkt. Es kann beispielsweise ein Telekommunikationsendgerät, eine Baugruppe, eine Maschine, ein Unterhaltungsendgeräte, PDA, Pager oder sonstiges elektronisches Gerät sein. Ein wichtiges Einsatzgebiet der Erfindung kann auch beim Aktualisieren von Software gesehen werden, beispielsweise in einem Systemnetz. Alternativ ist die Hardware des elektronischen Geräts in einem Kraftfahrzeug, sodass ein Fahrzeugbesitzer mittels der Chipkarte die Aktualisierung der Software selbst durchführt ohne im Rahmen einer aufwendigen Rückrufaktion sein Kraftfahrzeug zu einer Werkstatt befördern zu müssen.

Ein weiterer Vorteil des Verfahrens besteht darin, dass zur Programmierung des Geräts neben dem tragbaren Datenträger mit der auf den Gerät aufzubringende Software keine weitere Hardware notwendig ist, wodurch die Programmierung vereinfacht ist. Insbesondere wird kein zusätzlicher Software-Bootloader auf dem Rechner benötigt, da die JTAG-Schnittstelle eine direkte Kommunikation zwischen den beiden Komponenten ermöglicht.

Zur Programmierung des Geräts über die erste JTAG-Schnittstelle des Geräts und die zweite JTAG-Schnittstelle des Datenträgers werden gemäß einer zweckmäßigen Ausgestaltung vier JTAG-Signale ausgetauscht. Dies sind das eingangs bereits erwähnte Taktsignal (Tck), ein Moduswahlsignal (TMS), ein Dateneingangssignal (TDI) sowie ein Datenausgangssignal (TDO). Ein bei einer JTAG-Schruttstelle benötigtes fünftes Reset-Signal wird nicht benötigt. Der entsprechende Anschlusskontakt der JTAG-Schnittstellen wird vorzugsweise auf einen definierten Wert gesetzt.

Da der tragbare Datenträger als JTAG-Master bei der Programmierung des Geräts fungieren soll, wird für den JTAG-Modus durch den Datenträger ein Taktsignal erzeugt, das über die JTAG-Schruttstellen dem Gerät bereitgestellt wird. Die Spannungsversorgung für den Datenträger wird demgegenüber durch das Gerät bereitgestellt.

Es ist weiterhin vorteilhaft, wenn durch den Datenträger ein nicht-veränderlicher, öffentlicher Schlüssel des Geräts aus dem Gerät ausgelesen wird, welcher zur Verschlüsselung der Kommunikation zwischen dem Gerät und dem Datenträger verwendet wird. In diesem Zusammenhang ist es weiterhin vorteilhaft, wenn eine Authentisierung zwischen dem Gerät und dem Datenträger durchgeführt wird. Hierdurch kann die Sicherheit der Programmierung des Geräts weiter erhöht werden bzw. wird überprüft, ob die Software überhaupt zum elektronischen Gerät passt.

Gemäß einer weiteren Ausgestaltung erfolgt die Programmierung des Geräts unter Steuerung des Datenträgers. Hierdurch kann - wie vorstehend bereits erläutert - auf das Vorsehen weiterer Hardware-Komponenten zur Programmierung des Geräts verzichtet werden. Die Programmierung des Geräts erfolgt durch Herstellung einer Kommunikationsverbindung zwischen dem Gerät und dem tragbaren Datenträger.

Gemäß einer weiteren Ausgestaltung wird eine in dem Datenträger gespeicherte Datei aus dem Speicher des Datenträgers ausgelesen und an das Gerät übertragen. Dies erfolgt durch direkten Zugriff der JTAG-Schnittstelle auf den Speicher, wodurch ein zusätzlicher Software-Bootloader auf dem zu programmierenden Gerät entbehrlich ist. Insbesondere besteht die Möglichkeit, die auf das Gerät aufzubringende Software vollständig auf dem Datenträger vorzuhalten. Somit kann das zu programmierende Gerät in einem nicht-sicheren Umfeld zusammengebaut werden. Das Verfahren vereinfacht z.B. das Handling von Baugruppen für eine CCU (Computer Control Unit) sehr stark.

Zweckmäßigerweise wird die Programmierung mit dem Herstellen einer Kommunikation zwischen dem Datenträger und dem Gerät automatisch initiiert.

Gemäß einer weiteren vorteilhaften Ausgestaltung lässt der Datenträger die Programmierung maximal einer vorgegebenen Anzahl an unterschiedlichen Geräten zu. Hierzu kann beispielsweise ein Zähler auf dem Datenträger vorgesehen sein. Mit jeder Programmierung eines Geräts wird der Zähler des Datenträgers, ausgehend von einem Startwert, inkrementiert oder dekrementiert, wobei bei Erreichen eines vorgegebenen Endwerts eine Programmierung eines weiteren Geräts durch den Datenträger unterbunden wird.

Die Erfindung schafft weiterhin einen tragbaren Datenträger, insbesondere eine Chipkarte, mit einer Schnittstelle zum Datenaustausch mit einem Gerät. Der erfindungsgemäße Datenträger zeichnet sich dadurch aus, dass über die Schnittstelle mit dem Gerät eine Kommunikation im JTAG-Modus gemäß dem Standard IEEE 1149.1 ausführbar ist, in der der Datenträger als JTAG-Master fungiert.

Die Schnittstelle weist eine Kontaktiereinheit auf, über die im JTAG-Modus über vier freie Anschlusskontakte die Kommunikation zwischen dem Datenträger und dem Gerät durchführbar ist.

Der Datenträger weist einen Taktgenerator zur Erzeugung eines Taktsignals auf, das im JTAG-Modus über die Kontaktierschnittstelle dem Gerät bereitgestellt wird, so dass der tragbare Datenträger als JTAG-Master fungiert.

Optional kann der Datenträger einen nicht-flüchtigen Speicher für eine Datei umfassen, welche dazu vorgesehen ist, im JTAG-Modus auf den zu programmierenden Gerät übertragen zu werden. In einer weiteren optionalen Ausgestaltung ist der Datenträger zur verschlüsselten Kommunikation mit dem Gerät eingerichtet. Der Datenträger kann ferner einen Zähler für eine maximale Anzahl an Programmierungen unterschiedlicher Gerät aufweisen.

Die Erfindung schafft weiter ein elektronisches Gerät, insbesondere einen Rechner einer Maschinensteuerung oder Endgeräts, mit einer gemäß dem Standard IEEE 1149.1 ausgebildeten JTAG-Schnittstelle, über die mit einem Datenträger der oben bezeichneten Art eine Kommunikation im JTAG-Modus ausführbar ist, in der der Datenträger als JTAG-Master fungiert.

Die Schnittstelle des Geräts weist eine Kontaktiereinheit zur Herstellung einer physikalischen Verbindung zu der Kontaktiereinheit des Datenträgers auf, so dass die Programmierung durch bloße Herstellung einer Verbindung zwischen dem Datenträger und dem Gerät initiierbar ist.

Alternativ sind die Schnittstelle des Geräts und eine Kontaktiereinheit des Datenträgers über einen Adapter kontaktierbar. In einer weiteren alternativen Ausgestaltung ist es ebenfalls möglich, dass der Adapter die Taktversorgung für den JTAG-Master enthält. Die Taktversorgung kann weiterhin einen Frequenzteiler aufweisen, sodass die Chipkarte mit einem ersten Takt angesteuert wird und das Gerät mit dem JTAG-Takt versorgt wird.

Nachfolgend wird anhand von Figuren die Erfindung bzw. Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:
- Figur 1: eine schematische Darstellung einer Anordnung aus einem erfindungsgemäßen Gerät 10 und einem erfindungsgemäßen tragbaren Datenträger 20 zur Programmierung des Geräts 10 und
- Figur 2: eine alternative Ausführung zu der in Figur 1 gezeigten Anordnung.

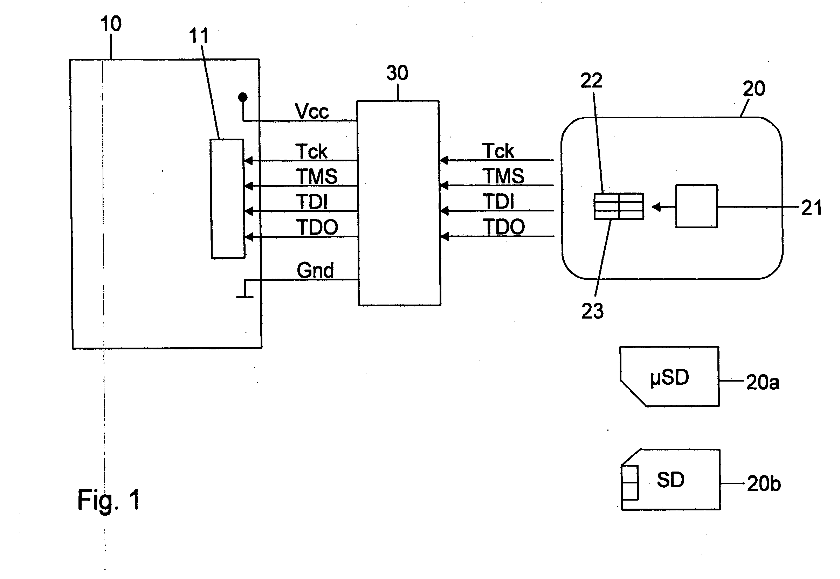

Die Figur 1 zeigt in einer schematischen Darstellung eine Anordnung aus einem erfindungsgemäßen Gerät 10 und einem erfindungsgemäßen tragbaren Datenträger 20 zur Programmierung des Geräts 10.

Das Gerät 10 kann beispielsweise die Steuerung einer Maschine, die Recheneinheit eines Endgeräts (z.B. Handy, PDA usw.) oder die Recheneinheit einer Baugruppe darstellen. Bei dem tragbaren Datenträger 20 handelt es sich beispielsweise um eine Chipkarte, welche im ID1-Format aber auch als MMC, SD- oder µSD-Karte (Bezugszeichen 20a, 20b) vorliegen kann. Prinzipiell kann der Datenträger 20 auch eine beliebige andere Form aufweisen.

Der Datenträger 20 weist eine Kontaktiereinheit 23 auf, welche im JTAG-Modus über vier freie Anschlusskontakte zur Ausbildung einer JTAG-Schnittstelle 22 verfügt. Die entsprechenden Anschlusskontakte werden mit einem Taktsignal (Tck) einem Modusauswahlsignal (Test Mode Select - TMS), einem Dateneingangssignal (TDI) sowie einem Datenausgangssignal (TDO) belegt. Weitere Signale zur Ansteuerung werden zur Programmierung des Geräts 10 nicht benötigt. Ein bei einer JTAG-Schnittstelle typischerweise vorgesehener fünfter Kontakt, der für einen Reset der Testlogik verwendet wird, wird auf einen definierten Wert, z.B. logisch "1", gesetzt. Das Gerät 10 verfügt ebenfalls über eine JTAG-Schnittstelle 11, wodurch dieser mit dem Datenträger 20 die JTAG-Signale (Tck, TMS, TDI, TDO) im JTAG-Modus austauschen kann.

Im vorliegenden Ausführungsbeispiel sind das Gerät 10 und der Datenträger 20 über einen Adapter 30 kommunikativ miteinander verbunden, welcher die physikalischen Ausprägungen der jeweiligen Kontaktiereinheiten des Geräts 10 und des Datenträgers 20 berücksichtigt und entsprechend anpasst. Über den Adapter 30 wird der Datenträger 20 durch das Gerät 10 mit Spannung (Vcc) versorgt. Ein entsprechendes Bezugspotential (Gnd) wird dem Datenträger 20 über den Adapter 30 ebenfalls von dem Gerät 10 bereitgestellt. Sofern die Kontaktiereinheiten des Geräts 10 und des Datenträgers 20 aneinander angepasst sind, kann der Datenträger 20 auch unter Umgehung des in der Figur dargestellten Adapters 30 direkt mit dem Gerät 10 verbunden werden.

Der Datenträger 20 weist weiterhin einen Speicher 21 auf, welcher eine Datei (allgemein Software) für die Programmierung des Geräts 10 beinhaltet. In dem Speicher 21 ist darüber hinaus eine Software für die Emulation des JTAG-Modus vorgesehen. Zur Programmierung des Geräts 10 wird der Datenträger 20 als JTAG-Master betrieben. Aus diesem Grund wird das Taktsignal Tck aktiv von dem Datenträger 20 erzeugt und dem Gerät 10 bereitgestellt.

In dem Gerät 10 kann ein öffentlicher Schlüssel hinterlegt sein, welcher zur Verschlüsselung der im JTAG-Modus zwischen dem Gerät 10 und dem Datenträger 20 ausgetauschten Daten verwendet wird. Vorzugsweise wird der öffentliche Schlüssel nur während der Produktion des Geräts einmalig vergeben und ist danach nicht mehr veränderlich, um einen Schutz vor Manipulation sicherzustellen.

Nach der Herstellung einer Kommunikationsverbindung zwischen dem Gerät 10 und dem Datenträger 20, d.h. einem Anlegen von Spannung an den Datenträger 20, wird zunächst mit Hilfe mehrerer Modus-Kommandos des TMS-Signals eine Abfrage des zu aktualisierenden Rechners 10 ermittelt.

Während dieses Vorgangs kann auch der öffentliche Schlüssel aus dem Gerät 10 ausgelesen und dem Datenträger 20 für die Verschlüsselung der weiteren Kommunikation zur Verfügung gestellt werden. Zusätzlich ist eine Authentisierung des Geräts 10 und des Datenträgers 20 möglich, wodurch sichergestellt werden kann, dass nur ein positiv authentisiertes Gerät programmiert werden kann. Hierdurch kann ein Missbrauch des Datenträgers 20 für die Programmierung mehrerer unterschiedlicher Geräte 10 unterbunden werden.

Der Datenträger 20 wird beispielsweise dazu verwendet, ein Software-Update für das Gerät über die JTAG-Schnittstelle einzuspielen. Dies ist beispielsweise zweckmäßig, wenn eine fehlerfreie Software zu einem Kunden via Datenträger übermittelt werden soll. Hierdurch können beispielsweise Rückrufaktionen vermieden werden, bei denen das Gerät zum Hersteller der Software geschickt werden muss.

Nachdem die Programmierung des Geräts bevorzugt verschlüsselt abläuft, bleiben Angriffe auf das Gerät über die JTAG-Schnittstelle erfolglos. Insbesondere wird eine Möglichkeit geschaffen, die Programmierung über die JTAG-Schnittstelle vorzunehmen, ohne zusätzliche Hardeware-Komponenten vorsehen zu müssen.

JTAG ist eine genormte Schnittstelle, die einfach und ohne feste Taktung arbeitet. Somit kann die Datenein- und -ausgabe via Software an den Schnittstellen simuliert werden. Taktgeschwindigkeiten ab 5 kHz mit asymmetrischen Ti/T sind zulässig.

Ein Datenträger in Gestalt einer Chipkarte, einer MMC, SD- oder µSD-Karte, verfügt über die benötigten vier Kontakte, wobei Spannungspegel von 3 V bzw. 5 V ausreichend bzw. möglich sind.

Die Kommunikation zwischen dem Gerät und dem Datenträger 20 kann derart ausgestaltet werden, dass der Datenträger 20 nur Programmierungen auf einem speziellen Gerät 10 zulässt (z.B. durch die Realisierung der gegenseitigen Authentisierung). Alternativ kann auch eine bestimmte Anzahl an Programmierungen, z.B. für eine Anzahl an unterschiedlichen Geräten, vorgesehen sein. Hierzu kann in dem Datenträger ein Zähler implementiert sein, welcher mit jedem erfolgreichen Programmiervorgang, ausgehend von einem Startwert bis zu einem Endwert dekrementiert bzw. inkrementiert wird. Nach Erreichen des Endwerts ist die Verwendung des Datenträgers 20 für weitere Programmierungen nicht mehr möglich.

Es besteht zudem die Möglichkeit, die Software des zu programmierenden Geräts vollständig auf dem Datenträger 20 vorzuhalten. Somit kann das Gerät in einem unsicheren Umfeld hergestellt werden. Dieses Verfahren vereinfacht beispielsweise das Handling von Geräten für die CCU sehr stark.

Ein weiterer Vorteil besteht darin, dass kein zusätzlicher Software-Bootloader in dem oder für den Rechner benötigt wird, da die JTAG-Schnittstelle direkt auf den Speicher des Datenträgers 20 zugreifen kann.

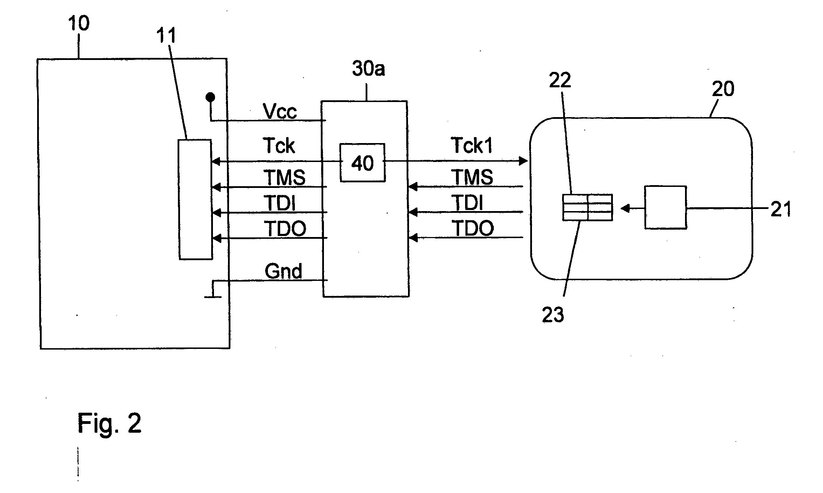

In Figur 2 ist ein alternatives Ausführungsbeispiel der Erfindung gezeigt. Die Figur 2 entspricht im Wesentlichen der Figur 1, sodass im Folgenden nur die Unterschiede zwischen Figur 1 und Figur 2 beschrieben wird.

In Figur 2 ist ein alternativer Adapter 30a gezeigt. Dieser Adapter 30a ist im Gegensatz zum Adapter 30 der Figur 1 mit einer eigenen Taktversorgung 40 ausgestattet. Diese Taktversorgung 40 erzeugt einen ersten Takt Tck1 für die Chipkarte 20 und einen zweiten Takt Tck. Die Belegung der Signale zum gerät 10 ist identisch zu der Belegung aus Figur 1. Der Takt Tck1 ist in einer besonderen Ausgestaltung ein ganzzahliges Vielfaches des Tck Taktes.

Durch diese Ausführungsform ist die Taktversorgung mittels des Adapters gewährleistet, sodass die Chipkarte als JTAG-Master keine Taktversorgung benötigt.

### Bezugszeichenliste

- 10: Gerät
- 11: JTAG-Schnittstelle
- 20: Datenträger (Chipkarte)
- 21: Speicher
- 22: JTAG-Schnittstelle
- 23: Kontakteinheit
- 24: Kontaktiereinheit
- 30: Adapter
- 30a: Adapter
- 40: Taktversorgung
- Tck: Taktsignal
- TMS: Signal zur Modus-Auswahl
- TDI: eingehende Daten
- TDO: ausgehende Daten
- VCC: Versorgungsspannung
- Gnd: Bezugspotential

## Patentansprüche

1. Verfahren zum Programmieren eines elektronischen Geräts (10) zum Zweck des Aktualisierens von Software im Gerät (10), das eine erste, gemäß dem Standard IEEE 1149.1 ausgebildete, JTAG-Schnittstelle (11) umfasst, bei dem eine Chipkarte (20, 20a, 20b)bereitgestellt wird, die zum Datenaustausch mit dem Gerät (10) eine zweite, gemäß dem Standard IEEE 1149.1 ausgebildete, JTAG-Schnittstelle (22) umfasst, wobei die Chipkarte (20, 20a, 20b) mit dem Gerät (10) eine Kommunikation im JTAG-Modus ausführt, in der die Chipkarte (20, 20a, 20b) als JTAG-Master fungiert.

2. Verfahren nach Anspruch 1, bei dem zur Programmierung des Geräts (10) über die erste JTAG-Schnittstelle des Geräts (10) und die zweite JTAG-Schnittstelle der Chipkarte (20, 20a, 20b) vier JTAG-Signale ausgetauscht werden.

3. Verfahren nach Anspruch 1 oder 2, bei dem für den JTAG-Modus durch die Chipkarte (20, 20a, 20b) ein Taktsignal (Tck) erzeugt wird, das über die JTAG-Schnittstellen (11, 23) dem Gerät (10) bereitgestellt wird.

4. Verfahren nach einem der vorhergehenden Ansprüche, **dadurch gekennzeichnet, dass** die Spannungsversorgung für die Chipkarte (20, 20a, 20b) durch das Gerät (10) bereitgestellt wird.

5. Verfahren nach einem der vorhergehenden Ansprüche, bei dem durch die Chipkarte (20, 20a, 20b) ein nicht-veränderlicher, öffentlicher Schlüssel des Geräts (10) aus dem Gerät (10) ausgelesen wird, welcher zur Verschlüsslung der Kommunikation zwischen dem Gerät (10) und der Chipkarte (20, 20a, 20b) verwendet wird.

6. Verfahren nach einem der vorhergehenden Ansprüche, bei dem eine Authentisierung zwischen dem Gerät (10) und der Chipkarte (20, 20a, 20b) durchgeführt wird.

7. Verfahren nach einem der vorhergehenden Ansprüche, bei dem eine in der Chipkarte (20, 20a, 20b) gespeicherte Datei aus einem Speicher (21) des Datenträgers (20, 20a, 20b) ausgelesen und an das Gerät (10) übertragen wird.

8. Verfahren nach einem der vorhergehenden Ansprüche, bei dem die Programmierung mit dem Herstellen einer Kommunikation zwischen der Chipkarte (20, 20a, 20b) und dem Gerät (10) automatisch initiiert wird.

9. Verfahren nach einem der vorhergehenden Ansprüche, bei dem die Chipkarte (20, 20a, 20b) die Programmierung maximal einer vorgegebenen Anzahl an unterschiedlichen Geräten (10) zulässt.

10. Chipkarte (20, 20a, 20b) mit einer Schnittstelle zum Datenaustausch mit einem elektronischen Gerät (10) zum Zweck des Aktualisierens von Software im Gerät (10), **dadurch gekennzeichnet, dass** über die Schnittstelle (22) mit dem Gerät (10) eine Kommunikation im JTAG-Modus gemäß dem Standard IEEE 1149.1 ausführbar ist, in die Chipkarte (20, 20a, 20b) als JTAG-Master fungiert.

11. Chipkarte nach Anspruch 10, **dadurch gekennzeichnet, dass** die Schnittstelle (22) eine Kontaktiereinheit (23) aufweist, über die im JTAG-Modus über vier freie Anschlusskontakte die Kommunikation zwischen der Chipkarte (20, 20a, 20b) und dem Gerät (10) durchführbar ist.

12. Chipkarte nach Anspruch 10 oder 11, **dadurch gekennzeichnet, dass** diese einen Taktgenerator zur Erzeugung eines Taktsignals aufweist, das im JTAG-Modus über die Kontaktierschnittstelle (23) dem Gerät (10) bereitgestellt wird.

13. Gerät (10), insbesondere elektronisches Gerät einer Maschinensteuerung oder Endgerät, mit einer gemäß dem Standard IEEE 1149.1 ausgebildeten JTAG-Schnittstelle (11), über die mit einer Chipkarte (20, 20a, 20b) gemäß einem der Ansprüche 11 bis 13 eine Kommunikation im JTAG-Modus ausführbar ist, in der die Chipkarte als JTAG-Master fungiert.

14. Gerät nach Anspruch 13, **dadurch gekennzeichnet, dass** die Schnittstelle (11) des Geräts (10) eine Kontaktiereinheit zur Herstellung einer physikalischen Verbindung zu der Kontaktiereinheit (23) der Chipkarte aufweist.

15. Rechner nach Anspruch 13, **dadurch gekennzeichnet, dass** die Schnittstelle (11) des Geräts (10) und eine Kontaktiereinheit (23) der Chipkarte (20, 20a, 20b) über einen Adapter (30) kontaktierbar sind.

## Claims

1. A method for programming an electronic device (10) for the purpose of updating software in the device (10) that comprises a first JTAG interface (11) configured in accordance with the standard IEEE 1149.1, wherein a chip card (20, 20a, 20b) is made available that comprises a second JTAG interface (22) configured in accordance with the standard IEEE 1149.1 for data exchange with the device (10), wherein the chip card (20, 20a, 20b) executes a communication in the JTAG mode with the device (10) in which the chip card (20, 20a, 20b) functions as JTAG master.

2. The method according to claim 1, wherein for programming the device (10) four JTAG signals are exchanged via the first JTAG interface of the device (10) and the second JTAG interface of the chip card (20, 20a, 20b).

3. The method according to claim 1 or 2, wherein for the JTAG mode a clock signal (Tck) is generated by the chip card (20, 20a, 20b) which is made available to the device (10) via the JTAG interfaces (11, 23).

4. The method according to any of the preceding claims, **characterized in that** the voltage supply for the chip card (20, 20a, 20b) is made available by the device (10).

5. The method according to any of the preceding claims, wherein an invariable, public key of the device (10) is read out from the device (10) by the chip card (20, 20a, 20b), said key being used for encrypting the communication between the device (10) and the chip card (20, 20a, 20b).

6. The method according to any of the preceding claims, wherein an authentication is carried out between the device (10) and the chip card (20, 20a, 20b).

7. The method according to any of the preceding claims, wherein a file stored in the chip card (20, 20a, 20b) is read out from a memory (21) of the data carrier (20, 20a, 20b) and transmitted to the device (10).

8. The method according to any of the preceding claims, wherein the programming is automatically initiated upon establishing a communication between the chip card (20, 20a, 20b) and the device (10).

9. The method according to any of the preceding claims, wherein the chip card (20, 20a, 20b) permits the programming of maximally a predetermined number of different devices (10).

10. A chip card (20, 20a, 20b) having an interface for data exchange with an electronic device (10) for the purpose of updating software in the device (10), **characterized in that** via the interface (22) a communication is executable with the device (10) in the JTAG mode in accordance with the standard IEEE 1149.1, in which communication the chip card (20, 20a, 20b) functions as JTAG master.

11. The chip card according to claim 10, **characterized in that** the interface (22) has a contacting unit (23) via which the communication between the chip card (20, 20a, 20b) and the device (10) can be carried out in the JTAG mode via four free connecting contacts.

12. The chip card according to claim 10 or 11, **characterized in that** said chip card has a clock generator for generating a clock signal that is made available in the JTAG mode to the device (10) via the contacting interface (23).

13. A device (10), particularly an electronic device of a machine controller or a terminal, having a JTAG interface (11) configured in accordance with the standard IEEE 1149.1, via which a communication is executable in the JTAG mode with a chip card (20, 20a, 20b) in accordance with any of the claims 11 to 13, in which communication the chip card functions as JTAG master.

14. The device (10) according to claim 13, **characterized in that** the interface (11) of the device (10) has a contacting unit for the establishment of a physical connection to the contacting unit (23) of the chip card.

15. A computer according to claim 13, **characterized in that** the interface (11) of the device (10) and a contacting unit (23) of the chip card (20, 20a, 20b) are contactable via an adapter (30).

## Revendications

1. Procédé de programmation d'un appareil électronique (10) aux fins de l'actualisation de logiciel dans l'appareil (10) qui comprend une première interface JTAG (11) réalisée suivant le standard IEEE 1149.1, dans lequel une carte à puce (20, 20a, 20b) est mise à disposition, laquelle comprend, pour l'échange de données avec l'appareil (10), une deuxième interface JTAG (22) réalisée suivant le standard IEEE 1149.1, la carte à puce (20, 20a, 20b) exécutant avec l'appareil (10) une communication en mode JTAG dans laquelle la carte à puce (20, 20a, 20b) fait office de master JTAG.

2. Procédé selon la revendication 1, dans lequel, pour la programmation de l'appareil (10), quatre signaux JTAG sont échangés par l'intermédiaire de la première interface JTAG de l'appareil (10) et de la deuxième interface JTAG de la carte à puce (20, 20a, 20b).

3. Procédé selon la revendication 1 ou 2, dans lequel, pour le mode JTAG, par la carte à puce (20, 20a, 20b), un signal d'horloge (Tck) est généré, lequel est mis à disposition de l'appareil (10) par l'intermédiaire des interfaces JTAG (11, 23).

4. Procédé selon une des revendications précédentes, **caractérisé en ce que** l'alimentation en tension pour la carte à puce (20, 20a, 20b) est mise à disposition par l'appareil (10).

5. Procédé selon une des revendications précédentes, dans lequel, par la carte à puce (20, 20a, 20b), une clé publique non variable de l'appareil (10) est lue depuis l'appareil (10), laquelle est utilisée pour le cryptage de la communication entre l'appareil (10) et la carte à puce (20, 20a, 20b).

6. Procédé selon une des revendications précédentes, dans lequel une authentification est réalisée entre l'appareil (10) et la carte à puce (20, 20a, 20b).

7. Procédé selon une des revendications précédentes, dans lequel un fichier mémorisé dans la carte à puce (20, 20a, 20b) est lu depuis une mémoire (21) du support de données (20, 20a, 20b) et transmis à l'appareil (10).

8. Procédé selon une des revendications précédentes, dans lequel la programmation est automatiquement initiée par l'établissement d'une communication entre la carte à puce (20, 20a, 20b) et l'appareil (10).

9. Procédé selon une des revendications précédentes, dans lequel la carte à puce (20, 20a, 20b) autorise la programmation de, au maximum, un nombre donné d'appareils (10) différents.

10. Carte à puce (20, 20a, 20b) dotée d'une interface destinée à l'échange de données avec un appareil (10) électronique aux fins de l'actualisation de logiciel dans l'appareil (10), **caractérisée en ce que**, par l'intermédiaire de l'interface (22), une communication en mode JTAG suivant le standard IEEE 1149.1 avec l'appareil (10) est exécutable, dans laquelle la carte à puce (20, 20a, 20b) fait office de master JTAG.

11. Carte à puce selon la revendication 10, **caractérisée en ce que** l'interface (22) comporte une unité de mise en contact (23) par l'intermédiaire de laquelle la communication entre la carte à puce (20, 20a, 20b) et l'appareil (10) est réalisable en mode JTAG par l'intermédiaire de quatre plots de connexion libres.

12. Carte à puce selon la revendication 10 ou 11, **caractérisée en ce qu'**elle comporte un générateur d'horloge pour la génération d'un signal d'horloge qui, en mode JTAG, est mis à disposition de l'appareil (10) par l'intermédiaire de l'interface de mise en contact (23).

13. Appareil (10), notamment appareil électronique d'une commande de machine ou terminal, doté d'une interface JTAG (11) réalisée suivant le standard IEEE 1149.1 par l'intermédiaire de laquelle, avec une carte à puce (20, 20a, 20b) selon une des revendications de 11 à 13, une communication en mode JTAG dans laquelle la carte à puce fait office de master JTAG est exécutable.

14. Appareil selon la revendication 13, **caractérisé en ce que** l'interface (11) de l'appareil (10) comporte une unité de mise en contact pour l'établissement d'une connexion physique avec l'unité de mise en contact (23) de la carte à puce.

15. Ordinateur selon la revendication 13, **caractérisé en ce que** l'interface (11) de l'appareil (10) et une unité de mise en contact (23) de la carte à puce (20, 20a, 20b) peuvent être mis en contact par l'intermédiaire d'un adaptateur (30).
